# FASCICULE DE BREVET EUROPEEN

(11) **EP 2 069 186 B1**
(45) Date de publication et mention de la délivrance du brevet: **01.12.2010**
(21) Numéro de dépôt: 07848260.1
(22) Date de dépôt: 19.09.2007
(51) Int. Cl.: B62D 3/12, F16J 3/04

(54) **SOUFFLET DE BIELLETTE DE SYSTEME DE DIRECTION POUR VEHICULE AUTOMOBILE**
SPURSTANGEN-FALTENBALG FÜR DAS LENKSYSTEM EINES KRAFTFAHRZEUGS
STEERING-SYSTEM TIE ROD BELLOW FOR AN AUTOMOTIVE VEHICLE

(30) Priorité: 25.09.2006 FR 0608380
(43) Date de publication de la demande: 17.06.2009
(73) Titulaire: Jtekt Europe, 69540 Irigny (FR)
(72) Inventeur: GUILLARD, Grégory, F-69700 Givors (FR)
(74) Mandataire: Maureau, Philippe
(86) Numéro de dépôt international: PCT/FR2007/001528
(87) Numéro de publication internationale: WO 2008/037874

(56) Documents cités:
- US-A1- 2002 149 158

## Description

La présente invention concerne, de façon générale, les mécanismes de direction à crémaillère pour véhicules automobiles. Plus particulièrement, cette invention perfectionne les soufflets de biellettes dans de tels systèmes de direction.

Dans une direction à crémaillère de véhicule automobile, un pignon de direction est lié en rotation avec la colonne de direction, manoeuvrée à l'aide du volant de conduite du véhicule. Ce pignon vient en prise avec une crémaillère montée coulissante, suivant sa direction longitudinale, dans un carter de direction. Les deux extrémités opposées de la crémaillère, extérieures au carter, sont accouplées à deux biellettes de direction associées respectivement aux roues directrices droite et gauche du véhicule, les biellettes assurant la liaison entre la crémaillère et chacun des porte-fusée. Ainsi, la rotation du volant dans un sens ou dans l'autre, donc la rotation correspondante du pignon de direction, est convertie en une translation correspondante de la crémaillère qui, par l'intermédiaire des biellettes et des porte-fusée, provoque elle-même l'orientation des roues du véhicule, pour un braquage à droite ou à gauche.

Dans une telle direction à crémaillère, la liaison articulée entre chaque extrémité de la crémaillère et la biellette correspondante est une liaison à rotule, dite rotule "axiale", réalisée par un boîtier de rotule axiale solidaire de l'extrémité de la crémaillère, et par un pivot de rotule axiale à tête sphérique, solidaire de la biellette et monté tournant en tous sens dans le boîtier de rotule axiale.

Compte tenu de la mobilité de la crémaillère relativement au carter de direction, et de l'orientation variable de la biellette relativement à l'extrémité de la crémaillère, la protection de la direction dans la région de chaque rotule axiale est habituellement assurée par un soufflet de biellette, qui relie une extrémité du carter de direction à la biellette correspondante, en entourant l'extrémité de la crémaillère (extérieure au carter) et la rotule axiale. Une extrémité annulaire du soufflet est fixée autour de l'extrémité du carter de direction au moyen d'un premier collier d'attache serré autour de cette extrémité. L'autre extrémité annulaire du soufflet est fixée autour de la biellette, au moyen d'un second collier d'attache serré autour de cette autre extrémité. Ainsi fixé, le soufflet assure en principe l'étanchéité dans l'intervalle entre le carter de direction et la biellette. Entre ses deux extrémités ainsi attachées, le soufflet possède un certain nombre de spires, qui permettent l'allongement ou le raccourcissement de ce soufflet selon la position de la crémaillère relativement au carter de direction, et qui autorisent aussi une flexion du même soufflet, en fonction de l'orientation variable prise par la biellette grâce à l'articulation à rotule.

A titre d'exemples d'un tel soufflet de biellette et de son mode de montage habituel, il est ici fait référence aux documents de brevet EP 0327347 A2, US 2003/0057652 A1 et, US 2002/0149158 A1, ce dernier révélant le préambule de la revendication 1.

Bien que le soufflet de biellette et son montage, tels que précédemment exposés, soient théoriquement étanches, les spécifications des constructeurs automobiles définissant le niveau d'étanchéité requis pour des soufflets de systèmes de direction sont telles qu'il reste difficile de satisfaire à celles-ci avec les réalisations actuelles de soufflets.

En particulier, ces spécifications comprennent la tenue en immersion avec choc thermique, et l'étanchéité lors du lavage du véhicule à haute pression et haute température. Le test de tenue en immersion consiste en la mise à température maximum de fonctionnement du système de direction, dans une enceinte climatique, et l'immersion dans une solution d'eau salée à une température de 0° C, ceci en faisant fonctionner le système de direction et en répétant ce cycle plusieurs fois. L'étanchéité lors du lavage à haute pression et haute température fait référence aux conditions de lavage par jet d'eau sous haute pression, dans des installations de lavage des véhicules.

Dans les réalisations actuelles de soufflets de biellettes de direction, l'extrémité extérieure du soufflet montée autour de la biellette possède une simple forme de bague annulaire, sans dispositions d'étanchéité particulières, ce qui s'avère insuffisant pour le maintien de l'étanchéité dans le cas où la zone terminale du soufflet est directement soumise à un jet d'eau de lavage sous haute pression.

La présente invention vise à pallier cette insuffisance, et elle a donc pour but de perfectionner les soufflets de biellettes de systèmes de direction de manière à améliorer sensiblement l'étanchéité de la direction vis-à-vis d'un jet de lavage sous haute pression.

A cet effet, l'invention a pour objet un soufflet de biellette de système de direction à crémaillère pour véhicule automobile, le soufflet étant, de façon connue en soi, prévu pour relier une extrémité d'un carter de direction à une biellette de direction, en entourant une rotule axiale liant l'extrémité correspondante de la crémaillère à la biellette de direction, et le soufflet possédant une zone d'extrémité de forme générale annulaire prévue pour être montée autour de la biellette, ce soufflet étant essentiellement caractérisé par le fait de sa zone d'extrémité, de forme générale annulaire, comporte une lèvre annulaire déformable à fonction brise-jet qui est disposée extérieurement et qui, dans la position montée du soufflet, est dirigée vers la biellette de direction, la lèvre se déformant en fléchissant sous l'effet de la forte pression hydraulique d'un jet de lavage.

Avantageusement, la lèvre annulaire à fonction brise-jet possède un profil incurvé, tel que cette lèvre vienne au contact de la biellette sous l'effet de la pression d'un jet de liquide, notamment d'un jet d'eau de lavage sous haute pression.

Plus particulièrement, la lèvre annulaire à fonction brise-jet se situe, dans la position montée du soufflet, en regard d'une gorge annulaire de la biellette de direction, de manière à former une chicane.

Ainsi, l'idée inventive consiste à ajouter à l'extrémité extérieure du soufflet de biellette, en "amont" de la zone principale de liaison et d'étanchéité entre le soufflet et la biellette, une lèvre brise-jet déformable qui à l'état habituel n'est pas en contact avec la biellette, mais qui, notamment grâce à son profil incurvé, viendra en contact avec la biellette sous l'effet de la pression d'un jet d'eau de lavage. De cette manière, plus la pression du jet est élevée, plus la lèvre sera appuyée sur la biellette et rendra alors le contact étanche. Ainsi, le soufflet pourra satisfaire aux exigences ou prescriptions imposées, notamment celles d'étanchéité au lavage haute pression et haute température.

De plus, la solution technique selon l'invention s'avère particulièrement simple et économique, puisqu'elle se limite au rajout d'une lèvre brise-jet pouvant être directement obtenue de moulage avec le restant du soufflet, tandis que la gorge annulaire de la biellette, avec laquelle coopère la lèvre brise-jet, pourra être une gorge existante ayant pour fonction première d'arrêter en translation le soufflet.

L'invention sera mieux comprise à l'aide de la description qui suit, en référence au dessin schématique annexé représentant, à titre d'exemple, une forme d'exécution de ce soufflet de biellette de système de direction.
Figure 1 est une vue en coupe axiale d'un soufflet conforme à la présente invention, avec indication de la biellette correspondante et d'autres parties adjacentes du système de direction ;
Figure 2 est une vue en coupe, à échelle agrandie, montrant le détail de la zone d'extrémité du soufflet de la figure 1, avec sa lèvre brise-jet ;
Figure 3 est une vue similaire à la figure 2, illustrant à titre comparatif la zone d'extrémité d'un soufflet de biellette selon l'état de la technique.

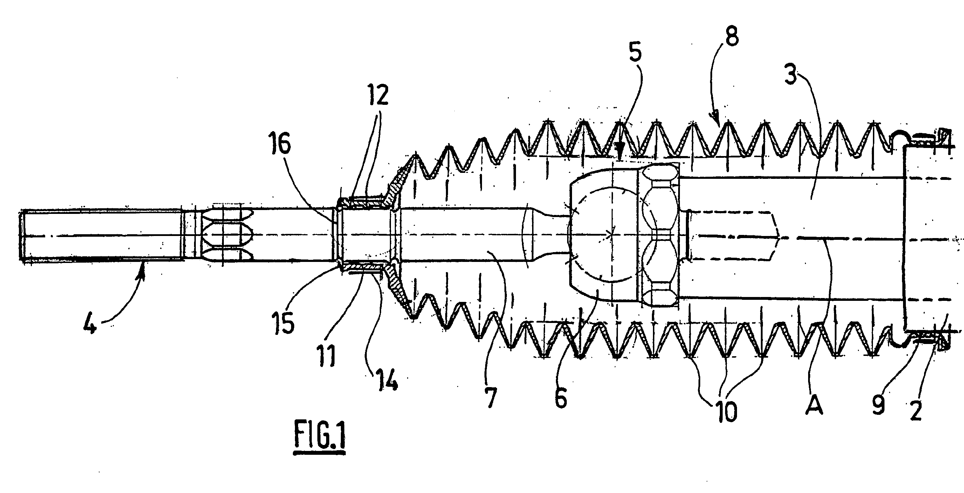

La figure 1 représente partiellement une direction à crémaillère, en particulier une extrémité d'un carter de direction 2, dans lequel est montée coulissante, suivant une direction longitudinale indiquée par l'axe A, une crémaillère 3 dont une extrémité se situe à l'extérieur du carter 2. L'extrémité de la crémaillère 3 est articulée à une biellette de direction 4 par l'intermédiaire d'une rotule axiale 5. Cette rotule 5 est composée, d'une part, d'un boîtier de rotule axiale 6 solidarisé, par exemple par vissage, avec l'extrémité de la crémaillère 3 et, d'autre part, d'un pivot de rotule axiale 7 formant l'extrémité de la biellette 4. Le pivot de rotule axiale 7 possède une tête sphérique montée orientable en toutes directions dans le boîtier de rotule axiale 6.

Un soufflet 8 relie l'extrémité du carter de direction 2 à la biellette 4, en entourant l'extrémité de la crémaillère 3 extérieure au carter 2, ainsi que la rotule axiale 5. Le soufflet 8 comporte successivement, dans le sens axial :
- une première zone d'extrémité annulaire 9, de diamètre intérieur adapté au diamètre extérieur de l'extrémité du carter 2 ;
- une série de spires 10, constituant une partie déformable en longueur et en flexion ;
- une seconde zone d'extrémité annulaire 11, de diamètre réduit, prévue pour être montée autour de la biellette 4.

De manière connue en soi, la seconde zone d'extrémité annulaire 11 du soufflet 8 comporte, intérieurement, des dispositions d'étanchéité et d'accrochage à la biellette 4, qui comprennent notamment deux ou trois bourrelets annulaires intérieurs 12. Cette seconde zone d'extrémité 11 présente aussi une gorge annulaire extérieure 13, dans laquelle est posé et serré un collier d'attache 14.

Selon l'invention, la face terminale annulaire de la seconde zone d'extrémité 11 du soufflet 8 porte une lèvre annulaire brise-jet 15, de profil incurvé et dirigée vers l'axe du soufflet 8. La lèvre brise-jet 15 se situe ainsi à l'extérieur des bourrelets 12.

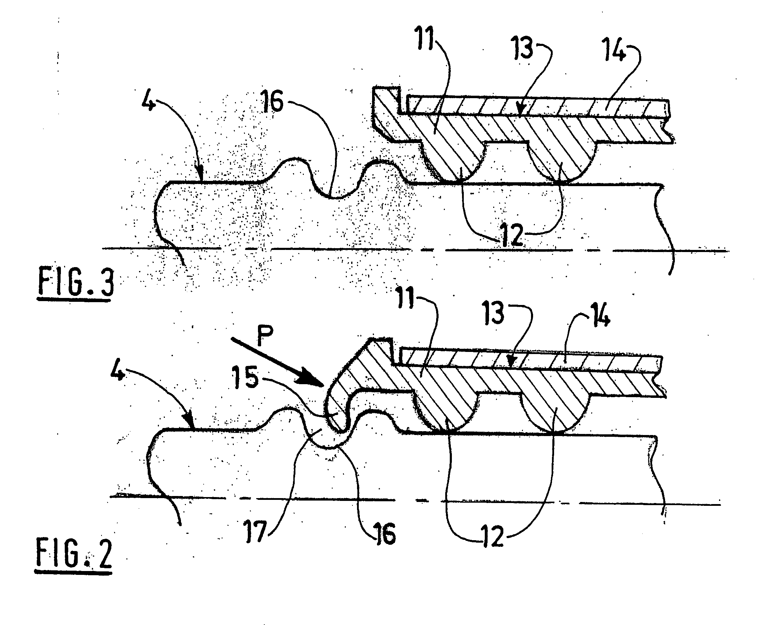

Dans la position montée du soufflet 8, comme le montre plus particulièrement la figure 2, la lèvre brise-jet 15 se situe en regard d'une gorge annulaire 16 de la biellette 4. Dans les conditions normales, c'est-à-dire lorsque la lèvre brise-jet 15 n'est soumise à aucune sollicitation, celle-ci reste à une faible distance de la périphérie de la biellette 4, une chicane 17 étant formée au niveau de la gorge 16.

Sous l'effet de la forte pression hydraulique P d'un jet de lavage, la lèvre brise-jet 15 se déforme en fléchissant, et elle vient ainsi au contact de la périphérie de la biellette 4, pour parfaire l'étanchéité de la direction vis-à-vis de l'extérieur.

Ainsi, la lèvre brise-jet 15 agit doublement :
- D'une part, par l'effet « absorbant » de cette lèvre 15, l'énergie du jet de lavage est réduite et l'eau du jet n'aura plus de pression, de sorte qu'elle n'aura pas tendance à s'infiltrer entre la biellette 4 et le soufflet 8.
- D'autre part, le rapprochement de la lèvre 15 et de la biellette 4, complété par l'effet de la chicane 17, vient arrêter l'eau qui aurait encore tendance à s'infiltrer entre la biellette 4 et le soufflet 8.

A titre comparatif, la figure 3 illustre la zone d'extrémité 11 d'un soufflet selon l'état de la technique, qui est dépourvue de lèvre brise-jet. Cette figure montre aussi que, dans les réalisations antérieures, la gorge annulaire 16 de la biellette 4 existe déjà, en tant que moyen d'arrêt en translation du soufflet.

Le soufflet de biellette de système de direction, objet de l'invention, est applicable aux systèmes de direction assistée électrique ou hydraulique, ainsi qu'aux directions manuelles (c'est-à-dire sans assistance) et, plus généralement, à tous les types de direction à crémaillère utilisables dans le domaine des véhicules automobiles.

On ne s'éloignerait pas du cadre de l'invention, telle que définie dans les revendications annexées, par des modifications concernant par exemple :
- les formes de détail de la lèvre brise-jet, et celles de la gorge correspondante de la biellette de direction ;
- les détails de forme du soufflet lui-même, hors de sa zone d'extrémité, par exemple le nombre de spires de ce soufflet ;
- les moyens de liaison du soufflet avec le carter et avec la biellette, ainsi qu'éventuellement (en un point intermédiaire de sa longueur) avec la rotule axiale.

## Revendications

1. Soufflet de biellette de système de direction à crémaillère pour véhicule automobile, le soufflet (8) étant prévu pour relier une extrémité d'un carter de direction (2) à une biellette de direction (4), en entourant une rotule axiale (5) liant l'extrémité correspondante de la crémaillère (3) à la biellette de direction (4), et le soufflet (8) possédant une zone d'extrémité (11) de forme générale annulaire prévue pour être montée autour de la biellette (4), où sa zone d'extrémité (11), de forme générale annulaire, comporte une lèvre annulaire déformable à fonction brise-jet (15) qui est disposée extérieurement et qui, dans la position montée du soufflet (8), est dirigée vers la biellette de direction (4), **caractérisé en ce que** la lèvre (15) se déforme en fléchissant sous l'effet de la forte pression hydraulique (P) d'un jet de lavage.

2. Soufflet de biellette de système de direction selon la revendication 1, **caractérisé en ce que** la lèvre annulaire à fonction brise-jet (15) possède un profil incurvé, tel que cette lèvre (15) vienne au contact de la biellette (4) sous l'effet de la pression (P) d'un jet de liquide, notamment d'un jet d'eau de lavage sous haute pression.

3. Soufflet de biellette de système de direction selon la revendication 1 ou 2, **caractérisé en ce que** la lèvre annulaire à fonction brise-jet (15) se situe, dans la position montée du soufflet (8), en regard d'une gorge annulaire (16) de la biellette de direction (4), de manière à former une chicane (17).

## Claims

1. A rack-and-pinion steering system tie rod bellow for an automotive vehicle, the bellow (8) being provided for connecting one end of a steering case (2) to a steering tie rod (4), by surrounding an axial ball-joint (5) connecting the corresponding end of the rack (3) to the steering tie rod (4), and the bellow (8) having an end area (11) with a general annular shape intended to be mounted around the tie rod (4) wherein its end area (11) with a general annular shape includes a deformable annular lip (15) with a jet-breaking function which is positioned on the outside and which, in the mounted position of the bellow (8), is directed towards the steering tie-rod (4), **characterized in that** the lip (15) deforms by bending under the effect of the strong hydraulic pressure (P) of a washing jet.

2. The steering-system tie rod bellow according to claim 1, **characterized in that** the annular lip with a jet-breaking function (15) has a curved profile, such that this lip (15) will come into contact with the tie rod (4) under the effect of the pressure (P) of a liquid jet, notably of a highly pressurized washing water jet.

3. The steering-system tie rod bellow according to claim 1 or 2, **characterized in that** the annular lip with a jet-breaking function (15) is located, in the mounted position of the bellow (8), opposite an annular groove (16) of the steering tie rod (4), so as to form a baffle (17).

## Patentansprüche

1. Spurstangen-Faltenbalg für das Lenksystem mit Zahnstange eines Kraftfahrzeugs, wobei der Faltenbalg (8) dazu vorgesehen ist, ein Ende eines Lenkgehäuses (2) mit einer Lenkspurstange (4) zu verbinden, indem ein axiales Kugelgelenk (5), das das entsprechende Ende der Zahnstange (3) mit der Lenkspurstange verbindet, umgeben wird, und wobei der Faltenbalg (8) einen Endbereich (11) mit im Allgemeinen runder Form aufweist, der dazu vorgesehen ist, um die Spurstange (4) montiert zu werden, wo ihr im Allgemeinen ringförmiger Endbereich (11) eine ringförmige, verformbare Lippe mit der Funktion eines Strahlreglers (15) umfasst, die außen angebracht ist und die, in der montierten Position des Faltenbalgs (8), auf die Richtungsspurstange (4) gerichtet ist, **dadurch gekennzeichnet, dass** sich die Lippe (15) unter der Einwirkung des starken hydraulischen Drucks (P) eines Waschstrahls durch Biegen verformt.

2. Spurstangen-Faltenbalg für das Lenksystem nach Anspruch 1, **dadurch gekennzeichnet, dass** die ringförmige Lippe mit der Funktion eines Strahlreglers (15) ein gebogenes Profil aufweist, so dass diese Lippe (15) mit der Spurstange (4) unter der Wirkung des Drucks (P) eines Flüssigkeitsstrahls, insbesondere eines Waschwasserstrahls unter hohem Druck, in Kontakt kommt.

3. Spurstangen-Faltenbalg für das Lenksystem nach Anspruch 1 oder 2, **dadurch gekennzeichnet, dass** die ringförmige Lippe mit der Funktion eines Strahlreglers (15) in der montierten Position des Faltenbalgs (8) gegenüber einer ringförmigen Auskehlung (16) der Richtungsspurstange (4) angeordnet ist, um ein Hindernis (17) zu bilden.
